# FASCICULE DE BREVET EUROPEEN

(11) **EP 3 234 404 B1**
(45) Date de publication et mention de la délivrance du brevet: **24.07.2019**
(21) Numéro de dépôt: 14828046.4
(22) Date de dépôt: 15.12.2014
(51) Int. Cl.: F16F 15/139

(54) **DISPOSITIF DE TRANSMISSION DE COUPLE, NOTAMMENT POUR VEHICULE AUTOMOBILE**
DREHMOMENTÜBERTRAGUNGSVORRICHTUNG, INSBESONDERE FÜR EIN KRAFTFAHRZEUG
TORQUE TRANSMISSION DEVICE, IN PARTICULAR FOR A MOTOR VEHICLE

(43) Date de publication de la demande: 25.10.2017
(73) Titulaire: Valeo Embrayages, 80009 Amiens Cedex 2 (FR)
(72) Inventeur: FENIOUX, Daniel, F-80480 Saleux (FR)
(86) Numéro de dépôt international: PCT/FR2014/053345
(87) Numéro de publication internationale: WO 2016/097494

(56) Documents cités:
- WO-A1-2011/000340
- DE-A1-102011 081 911
- DE-A1-102013 204 756

## Description

La présente invention concerne un dispositif de transmission de couple, notamment pour véhicule automobile, destiné par exemple à équiper un double volant amortisseur.

Le document DE 10 2013 204 756 divulgue un double volant amortisseur comportant un volant primaire et un voile annulaire formant une partie d'un volant secondaire. Le volant primaire et le voile annulaire sont montés pivotants l'un par rapport à l'autre, des ressorts étant engagés circonférentiellement entre le volant primaire et le voile annulaire.

Le volant primaire comporte en particulier deux rondelles de guidage, délimitant entre elles un volume interne dans lequel sont logés le voile annulaire et les ressorts.

Le double volant amortisseur comporte en outre une première et une seconde rondelles de frottement annulaires disposées de part et d'autre du voile annulaire et liées en rotation audit voile. Une première rondelle élastique de type rondelle Belleville est montée entre la première rondelle de frottement et le voile annulaire. Une seconde rondelle élastique de type rondelle Belleville est montée entre la seconde rondelle de frottement et le voile annulaire. Les rondelles de frottement sont ainsi repoussées axialement contre les rondelles de guidage, de manière à frotter contre celles-ci lorsque le voile annulaire pivote par rapport aux rondelles de guidage, c'est-à-dire lors du pivotement du volant secondaire par rapport au volant primaire. De tels moyens de frottement sont également appelés moyens à hystérésis et permettent de dissiper de l'énergie par frottement.

Une rondelle élastique de type rondelle Belleville est, de façon générale, apte à générer un effort axial augmentant progressivement avec sa déformation axiale, jusqu'à atteindre une valeur maximale d'effort, l'effort axial généré par la rondelle élastique diminuant ensuite avec sa déformation axiale, au-delà de ladite valeur maximale.

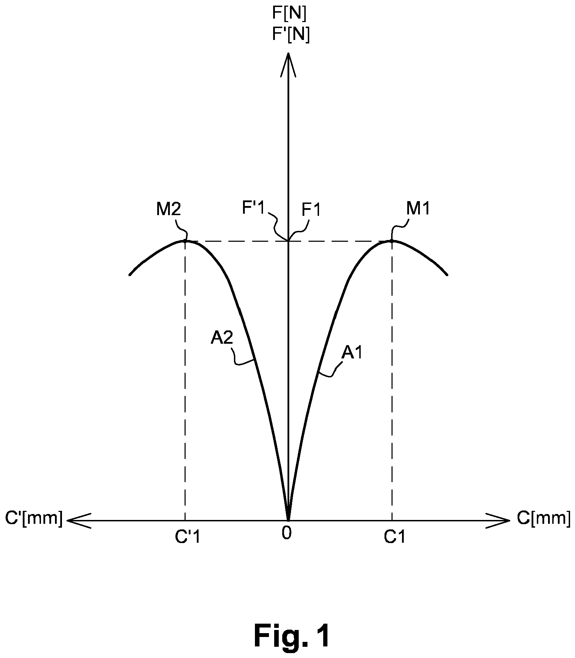

La figure 1 illustre l'évolution des efforts axiaux F, F' générés respectivement par les première et seconde rondelles élastiques en fonction respectivement du débattement ou de la compression C, C' de la première et de la seconde rondelles élastiques.

La courbe A1 forme ainsi la courbe caractéristique de la première rondelle élastique et la courbe A2 forme la courbe caractéristique de la seconde rondelle élastique.

Comme cela est visible sur ce diagramme, l'effort axial F généré par la première rondelle élastique augmente avec le débattement ou la compression axial C de la première rondelle élastique (partie croissante de la courbe A1), jusqu'à atteindre la valeur maximale F1 pour la valeur de débattement C1 (point M1 de la courbe A1, formant un maximum de la courbe A1). A partir de C1, l'effort axial F diminue (partie décroissante de la courbe A1). Un tel phénomène est appelé ensellement et le point M1 est appelé point d'ensellement de la courbe A1.

La courbe caractéristique A2 présente une forme générale similaire à la courbe A1. Comme précédemment, l'effort axial F' généré par la seconde rondelle élastique augmente avec le débattement ou la compression axiale C' de la deuxième rondelle élastique (partie croissante de la courbe A2), jusqu'à atteindre la valeur maximale F'1 pour la valeur de débattement C'1 (point M2 de la courbe A2, formant un maximum de la courbe A2). A partir de C'1, l'effort axial F' diminue (partie décroissante de la courbe A2). Le point M2 est donc le point d'ensellement de la courbe A2.

On notera que les valeurs F1 et F'1 sont identiques et que les valeurs C1 et C'1 sont également identiques, car on suppose dans ce diagramme que les deux rondelles élastiques sont théoriquement parfaitement identiques. En effet, les courbes A1 et A2 sont des courbes caractéristiques théoriques.

On cherche de préférence à ajuster les dimensions et les tolérances des différentes pièces du double volant amortisseur de façon à comprimer par exemple les première et seconde rondelles afin d'atteindre les efforts maximaux F1 et F'1. On souhaite ainsi se placer aux points M1 et M2 après montage du double volant amortisseur.

Cependant, compte tenu des contraintes de fabrication, il est difficile de réaliser des rondelles élastiques ayant exactement les mêmes caractéristiques d'élasticité, en particulier ayant exactement les mêmes formes de courbes A1, A2, les mêmes valeurs F1, F'1 et/ou ayant exactement les mêmes valeurs C1, C'1.

La courbe caractéristique réelle de la première rondelle élastique est ainsi telle que la valeur réelle de l'effort au point M1 est comprise entre F1+Ep et F1+En où F1 est la valeur théorique d'effort au point M1, où Ep est l'erreur positive et où En est l'erreur négative (l'erreur négative ayant un signe négatif). On notera que les valeurs d'efforts théoriques et les erreurs positives et négatives sont en général fournies par le fabricant des rondelles élastiques. Il est également possible d'effectuer des tests sur un lot de rondelles élastiques de façon à en déduire F1+Ep et F1+En. Un tel test consiste à mesurer l'effort axial généré par plusieurs rondelles, en fonction de leur déformation, de façon à obtenir plusieurs courbes caractéristiques et d'en déduire la plage de valeurs pour les efforts maximum réels, cette plage étant comprise entre F1+Ep et F1+En.

De même, la courbe caractéristique réelle de la seconde rondelle élastique est telle que la valeur réelle de l'effort au point M2 est comprise entre F'1+E'p et F'1+E'n où F'1 est la valeur théorique d'effort au point M2, où E'p est l'erreur positive et où E'n est l'erreur négative.

Ainsi, après montage du dispositif, les première et seconde rondelles de guidage sont comprimées de telle sorte que le point d'utilisation réel de l'une au moins des rondelles peut être décalé du point M1 ou M2 correspondant, en particulier dans la partie décroissante de la courbe caractéristique correspondante.

Ceci induit un mauvais fonctionnement et des mauvaises performances du double volant amortisseur.

L'invention a notamment pour but d'apporter une solution simple, efficace et économique à ce problème.

A cet effet, elle propose un dispositif de transmission de couple, notamment pour véhicule automobile, comportant un voile annulaire, un premier et un second organes de frottement annulaires situés axialement de part et d'autre du voile annulaire et couplés en rotation avec ledit voile annulaire, des premiers et seconds moyens élastiques montés axialement de façon contrainte entre respectivement le premier et le second organes de frottement, d'une part, et le voile annulaire, d'autre part, de façon à exercer un effort axial tendant à écarter axialement lesdits organes de frottement l'un de l'autre,
les premiers moyens élastiques étant choisis de façon à présenter une courbe caractéristique théorique de l'effort axial généré par les premiers moyens élastiques, en fonction de la déformation axiale des premiers moyens élastiques, comportant une portion croissante jusqu'à atteindre une première valeur d'effort théorique F1 formant un maximum d'effort théorique, suivie d'une portion décroissante, la première valeur d'effort théorique F1 étant donnée avec une première erreur positive Ep et avec une première erreur négative En,
caractérisé en ce que les seconds moyens élastiques sont choisis de façon à présenter une courbe caractéristique théorique de l'effort axial généré par les seconds moyens élastiques, en fonction de la déformation axiale des seconds moyens élastiques, comportant une portion croissante dans laquelle l'effort axial augmente continument avec la déformation axiale desdits seconds moyens élastiques, au moins jusqu'à une seconde valeur d'effort théorique F'1, la seconde valeur d'effort théorique F'1 étant donnée avec une seconde erreur positive E'p et avec une seconde erreur négative E'n, les seconds moyens élastiques étant choisis tels que F1+Ep ≤ F'1+E'n.

L'invention permet ainsi de garantir que, après montage du dispositif par exemple dans un double volant amortisseur, les points d'utilisation réels de chacune des deux courbes caractéristiques sont situés dans des parties croissantes desdites courbes caractéristiques. Il est ainsi plus facile de prédire les efforts axiaux exercés par les premiers et seconds moyens élastiques ainsi que les positions des organes de frottement.

Les premiers moyens élastiques peuvent comporter au moins une rondelle élastiquement déformable, de type rondelle Belleville.

En outre, les seconds moyens élastiques peuvent comporter au moins une rondelle élastiquement déformable, de type rondelle Belleville.

En variante, les seconds moyens élastiques peuvent comporter au moins une tôle annulaire élastiquement déformable.

Dans ce cas, la périphérie radialement interne de la tôle peut être fixée au voile, par exemple par l'intermédiaire de rivets ou par soudage.

Par ailleurs, le voile annulaire peut comporter une partie annulaire à partir de laquelle des pattes, destinées à l'appui d'organes élastiques à action circonférentielle, s'étendent radialement vers l'extérieur.

De tels organes élastiques sont par exemple montés entre des rondelles de guidage et le voile annulaire.

En outre, le premier et le second organes de frottement annulaires peuvent comporter des moyens de positionnement axial et/ou radial par rapport au voile.

Le premier et le second organes de frottement annulaires peuvent être de structures identiques, de façon à faciliter leur réalisation et leur montage.

L'invention concerne également un double volant amortisseur, caractérisé en ce qu'il comporte deux rondelles de guidage délimitant entre elles un volume interne dans lequel est logé un dispositif de transmission de couple du type précité, les organes de frottement étant aptes à venir en appui et à frotter contre les rondelles de guidage, sous l'action des premiers et seconds moyens élastiques.

L'invention concerne enfin un procédé de conception d'un dispositif de transmission de couple, notamment pour véhicule automobile, comportant un voile annulaire, un premier et un second organes de frottement annulaires situés axialement de part et d'autre du voile annulaire et couplés en rotation avec ledit voile annulaire, des premiers et seconds moyens élastiques montés axialement de façon contrainte entre respectivement le premier et le second organes de frottement, d'une part, et le voile annulaire, d'autre part, de façon à exercer un effort axial tendant à écarter axialement lesdits organes de frottement l'un de l'autre, le procédé comportant les étapes consistant à :
- choisir les premiers moyens élastiques de façon à présenter une courbe caractéristique théorique de l'effort axial généré par les premiers moyens élastiques, en fonction de la déformation axiale des premiers moyens élastiques, comportant une portion croissante jusqu'à atteindre une première valeur d'effort théorique F1 formant un maximum d'effort théorique, suivie d'une portion décroissante, la première valeur d'effort théorique F1 étant donnée avec une première erreur positive Ep et avec une première erreur négative En,
- choisir les seconds moyens élastiques de façon à présenter une courbe caractéristique théorique de l'effort axial généré par les seconds moyens élastiques, en fonction de la déformation axiale des seconds moyens élastiques, comportant une portion croissante dans laquelle l'effort axial augmente continument avec la déformation axiale desdits seconds moyens élastiques, au moins jusqu'à une seconde valeur d'effort théorique F'1, la seconde valeur d'effort théorique F'1 étant donnée avec une seconde erreur positive E'p et avec une seconde erreur négative E'n, les seconds moyens élastiques étant choisis tels que F1+Ep ≤ F'1+E'n.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est un diagramme illustrant les courbes caractéristiques des efforts axiaux générés par les premiers et seconds moyens élastiques en fonction de la compression ou du débattement desdits moyens élastiques, pour un dispositif de l'art antérieur,
- les figures 2 à 10 illustrent une première forme de réalisation de l'invention, en particulier

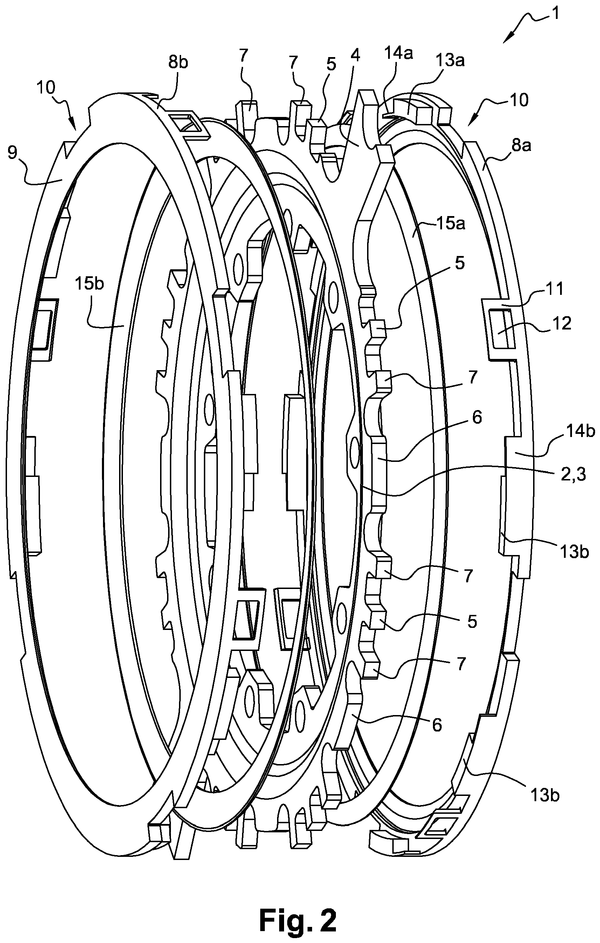

- la figure 2 est une vue éclatée et en perspective d'un dispositif de transmission de couple selon la première forme de réalisation de l'invention,

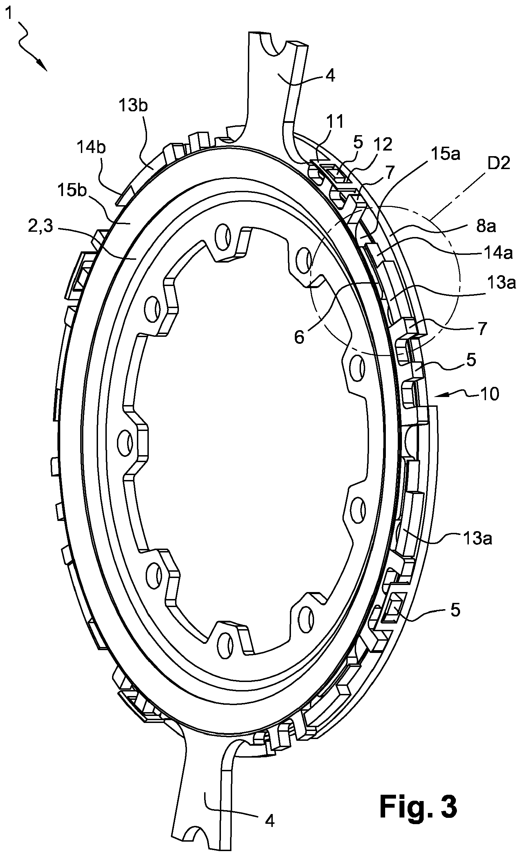

- la figure 3 est une vue en perspective d'une partie du dispositif,

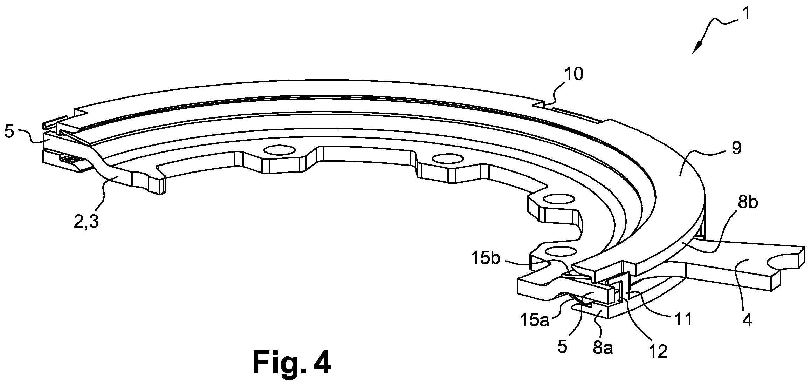

- la figure 4 est une vue du dispositif avec arrachage partiel,

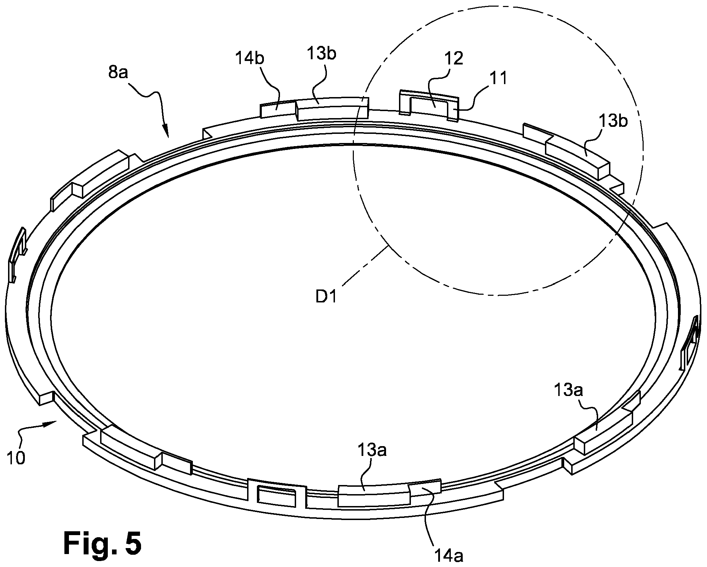

- la figure 5 est une vue en perspective d'un organe de frottement,

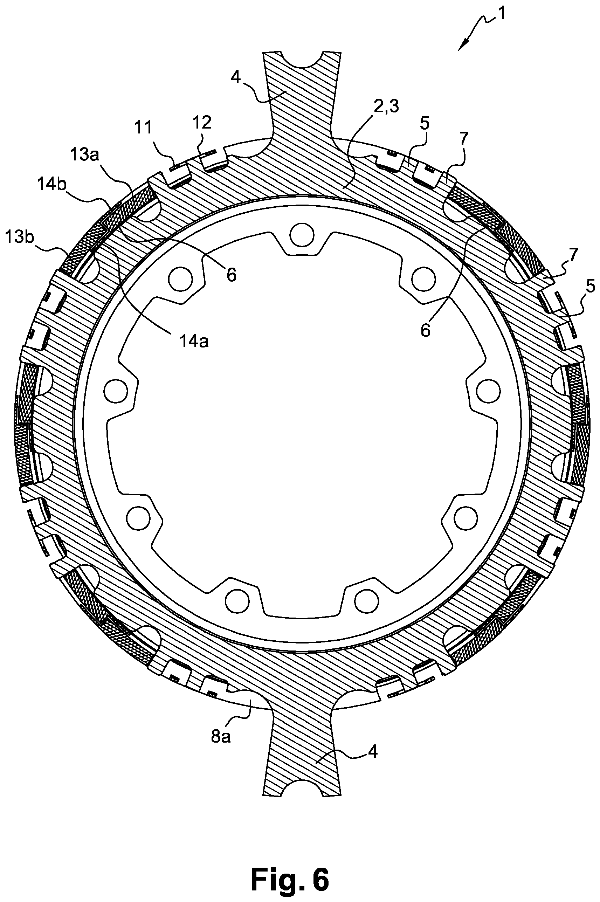

- la figure 6 est une vue en coupe radiale du dispositif,

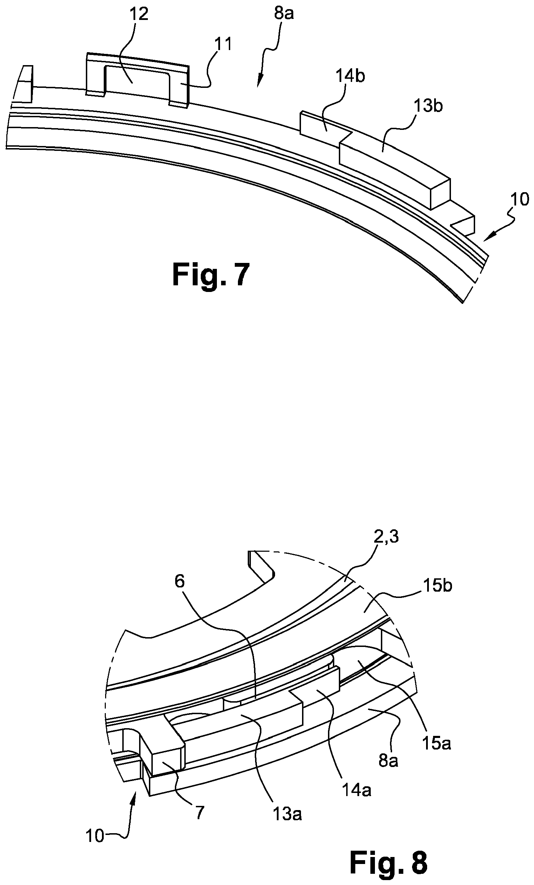

- la figure 7 est une vue du détail D1 de la figure 5,
- la figure 8 est une vue du détail D2 de la figure 3,

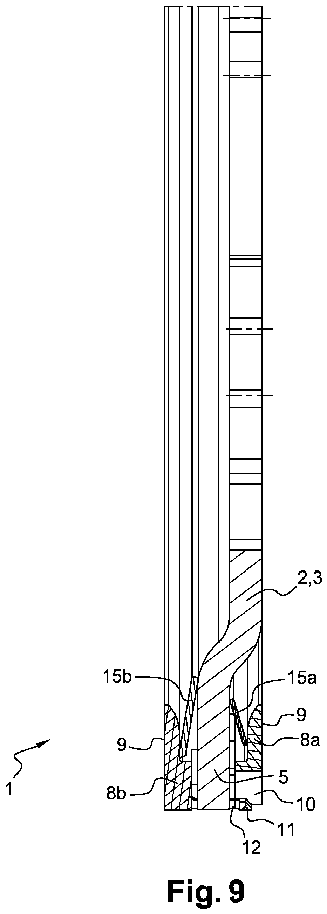

- la figure 9 est une demi-vue en coupe axiale du dispositif,

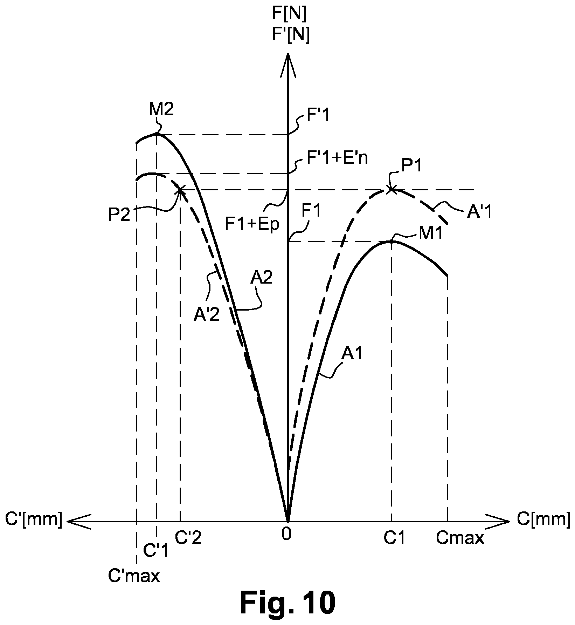

- la figure 10 est un diagramme correspondant à la figure 1 et illustrant la première forme de réalisation de l'invention,

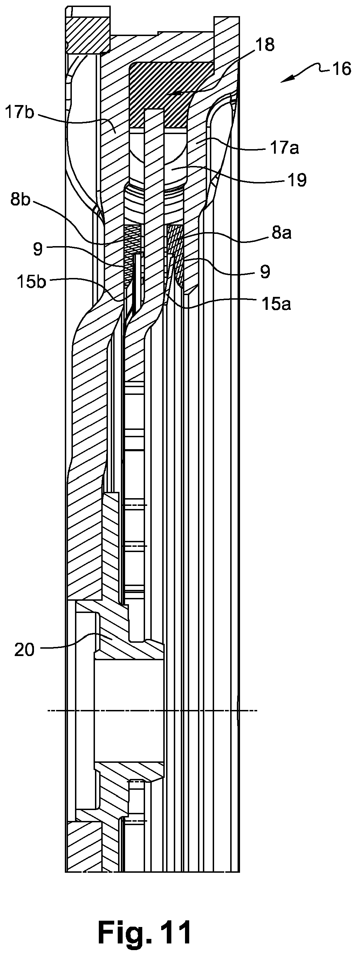

- les figures 11 à 13 illustrent une seconde forme de réalisation de l'invention, en particulier
- la figure 11 est une demi-vue en coupe axiale d'un double-volant amortisseur comportant un dispositif selon la seconde forme de réalisation de l'invention,

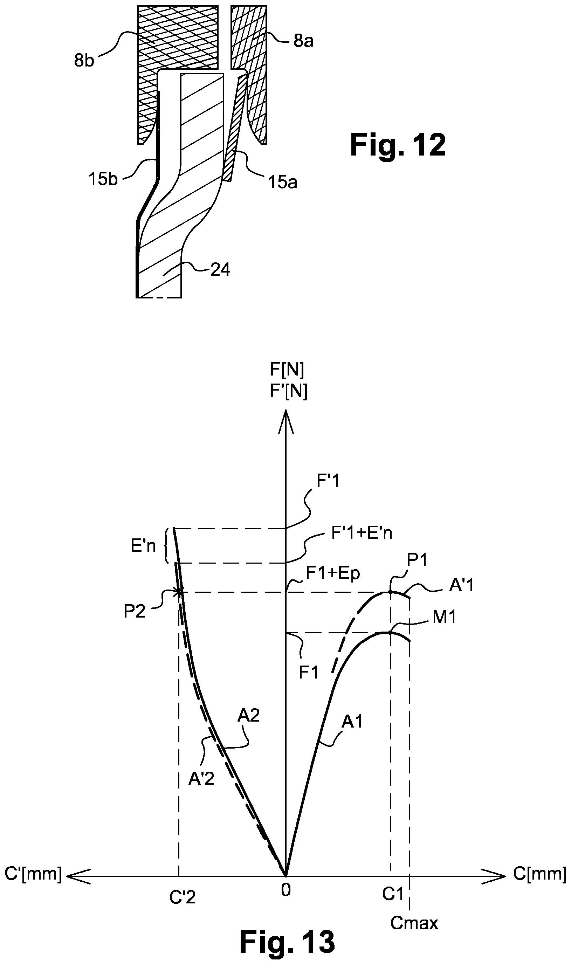

- la figure 12 est une section illustrant un détail du dispositif,
- la figure 13 est un diagramme correspondant à la figure 1 et illustrant la seconde forme de réalisation de l'invention.

Les figures 2 à 9 illustrent un dispositif de transmission de couple 1 selon une première forme de réalisation de l'invention. Celui-ci comporte un voile annulaire 2, destiné à être couplé par exemple à un volant d'inertie secondaire d'un double volant amortisseur, ledit voile annulaire 2 comportant une partie annulaire 3 radialement interne à partir de laquelle deux premières pattes 4 s'étendent radialement vers l'extérieur. Les première pattes 4 sont destinées à l'appui d'organes élastiques, tels que des ressorts hélicoïdaux de compression, montés entre un volant d'inertie primaire du double volant amortisseur et le voile 2. Comme vu précédemment, le volant primaire peut comporter deux rondelles de guidage délimitant entre elles un volume interne dans lequel est monté le dispositif 1 selon l'invention.

Des deuxièmes pattes ou doigts 5, de plus faible longueur, s'étendent également radialement vers l'extérieur depuis la partie annulaire 3.

Le voile annulaire 2 comporte en outre des zones ou surfaces d'appui 6, en forme de portions de cylindres.

Deux pattes de butée 7 sont situées circonférentiellement de part et d'autre de chaque zone d'appui 6. Les pattes de butée 7 sont écartées circonférentiellement des zones d'appui 6.

Les zones d'appui 6 sont décalées radialement vers l'extérieur par rapport à la périphérie externe de la partie annulaire 3 du voile 2 et sont décalées radialement vers l'intérieur par rapport aux extrémités radialement externes des pattes de butée 7.

Le dispositif comporte en outre deux organes de frottement 8a, 8b de mêmes structures et de mêmes dimensions, montés tête bêche l'un par rapport à l'autre.

En particulier, chaque organe de frottement 8a, 8b est de forme annulaire et présente une surface radiale de frottement 9 et des encoches 10 formées à sa périphérie radialement externe. Chaque organe de frottement 8a, 8b comporte en outre des languettes 11 s'étendant axialement, élastiquement déformables et comportant des ouvertures 12, chaque languette 11 étant encliquetée sur une deuxième patte 5 du voile annulaire 2 de manière à ce que la deuxième patte correspondante 5 soit engagée dans ladite ouverture 12. De préférence, la deuxième patte 5 est engagée sans jeu axial ou quasiment sans jeu axial dans l'ouverture 12 et la deuxième patte 5 est engagée avec un jeu circonférentiel dans ladite ouverture 12, de façon à éviter de sur-contraindre le montage des différents éléments du dispositif 1. Les dimensions axiales et circonférentielles des ouvertures 12 et des pattes 5 sont ainsi adaptées en conséquence. De plus, l'extrémité libre de chaque languette 11 est logée, au moins en partie, dans une encoche 10 de l'organe de frottement opposé 8a, 8b. Les languettes 11 permettent ainsi de positionner axialement les organes de frottement 8a, 8b par rapport au voile annulaire 2.

Chaque organe de frottement 8a, 8b comporte en outre des pattes axiales 13a, 13b, chaque patte 13a, 13b comportant des surfaces périphériques interne et externe en forme de portion de cylindre, reliées par des surfaces latérales de butée sensiblement radiales.

La surface périphérique interne de certaines pattes axiales 13a est prolongée circonférentiellement par une zone ou une surface d'appui 14a en portion de cylindre. La surface périphérique externe d'autres pattes axiales 13b est prolongée circonférentiellement par une zone ou une surface d'appui 14b en portion de cylindre.

Les pattes axiales 13a, 13b des deux organes de frottement opposés 8a, 8b sont montées à chaque fois côte à côte et de préférence sans jeu circonférentiel entre deux pattes de butée 7. Le terme « sans jeu » signifie qu'il n'y a pas de jeu fonctionnel permettant un éventuel débattement par exemple, bien qu'un faible jeu de montage puisse exister. Les pattes 13a, 13b prennent ainsi appui circonférentiellement l'une sur l'autre et sur les pattes de butées 7. Les pattes 13a, 13b, 7 permettent ainsi de coupler en rotation les organes de frottement 8a, 8b et le voile annulaire 2. Par ailleurs, la zone d'appui externe 14b de l'une 13b des pattes vient recouvrir extérieurement, de préférence sans jeu fonctionnel, le bord périphérique externe de la patte adjacente 13a. De même, la zone d'appui interne 14a de l'une 13a des pattes vient recouvrir, de préférence sans jeu fonctionnel, la périphérie interne de la patte adjacente 13b. Les zones d'appui 14a, 14b permettent ainsi d'assurer une dilatation radiale uniforme des organes de frottement 8a, 8b.

On notera que les pattes 13a, 13b, plus particulièrement les pattes 13a et les zones d'appui internes correspondantes 14a, peuvent être aptes à venir en appui sur les zones d'appui 6 du voile annulaire 2.

Une première rondelle Belleville 15a, apte à exercer un effort axial, peut être montée entre la partie annulaire interne 3 du voile 2 et le premier organe de frottement 8a. Une seconde rondelle Belleville 15b, apte à exercer un effort axial, peut être montée entre la partie annulaire interne 3 du voile 2 et le second organe de frottement 8b.

Les rondelles Belleville 15a, 15b sont ainsi destinées à repousser axialement les organes de frottement 8a, 8b contre les rondelles de guidage du double volant amortisseur, de manière à ce que les surfaces radiales de frottement 9 desdits organes 8a, 8b viennent frotter contre des surfaces complémentaires des rondelles de guidage.

La courbe caractéristique théorique A1 de la première rondelle élastique 15a est illustrée sur le diagramme de la figure 10. Cette courbe théorique A1 est une courbe nominale souhaitée et a un effort axial maximal noté F1, obtenu pour une déformation ou une compression C1 de la première rondelle 15a.

La courbe A1 comporte ainsi une partie croissante, pour des valeurs de déformation ou de compression comprises entre 0 et C1, suivie d'une partie décroissante pour des valeurs comprise entre C1 et Cmax. Cmax est la valeur de déformation pour laquelle la première rondelle 15a est complètement écrasée et vient en appui à plat sur les surfaces concernées.

Compte tenu des contraintes de fabrication, la courbe caractéristique réelle A'1 peut être différente de la courbe caractéristique théorique A1. La courbe réelle A'1 peut ainsi être décalée vers le haut, le bas, la gauche et/ou la droite par rapport à la courbe théorique A1. En particulier, l'effort réel maximal peut varier entre F1+Ep et F1+ En où Ep et En sont respectivement les erreurs positives et négatives dues aux contraintes de fabrication de la première rondelle 15a. Ces erreurs sont en général données par le fabricant et sont par exemple comprise 0,05.F1 et 0,1.F1. On notera que l'erreur En est négative.

On supposera à la figure 10 un cas défavorable où la courbe réelle A'1 est décalée vers le haut par rapport à la courbe réelle A1, c'est-à-dire où l'effort maximal réel appliqué par la première rondelle 15a est égal à F1+ Ep.

De même, la courbe caractéristique théorique A2 de la seconde rondelle élastique 15b est illustrée sur le diagramme de la figure 10. Cette courbe théorique A2 est une courbe nominale souhaitée et a un effort axial maximal noté F'1, obtenu pour une déformation ou une compression C'1.

La courbe A2 comporte ainsi une partie croissante, pour des valeurs de déformation ou de compression comprises entre 0 et C'1, suivie d'une partie décroissante pour des valeurs comprise entre C'1 et C'max. C'max est la valeur de déformation pour laquelle la seconde rondelle 15b est complètement écrasée et vient en appui à plat sur les surfaces concernées.

Compte tenu des contraintes de fabrication, la courbe caractéristique réelle A'2 peut être différente de la courbe caractéristique théorique A2. La courbe réelle A'2 peut ainsi être décalée vers le haut, le bas, la gauche et/ou la droite par rapport à la courbe théorique A2. En particulier, l'effort réel maximal peut varier entre F'1+ E'p et F'1+E'n où E'p et E'n sont respectivement les erreurs positives et négatives dues aux contraintes de fabrication de la seconde rondelle 15b. Comme précédemment, ces erreurs sont par exemple comprises entre 0,05.F'1 et 0,1.F'1. On notera que l'erreur E'n est négative.

On supposera à la figure 10 un cas défavorable où la courbe réelle A'2 est décalée vers le bas par rapport à la courbe réelle A2, c'est-à-dire où l'effort maximal réel appliqué par la seconde rondelle 15b est égal à F'1+ E'n.

Selon l'invention, les première et seconde rondelles 15a, 15b sont choisies, pré-déterminées ou sélectionnées de façon à ce que F1+Ep ≤ F'1+E'n.

Ainsi, pour une valeur C1 de compression de la première rondelle 15a, l'effort axial réel généré par la première rondelle est égal F1+Ep. A l'équilibre après montage, l'effort axial opposé généré par la seconde rondelle 15b est donc également égal à F1+Ep, ce qui correspond alors à une compression C'2, inférieure à C'1. Le point d'utilisation réel P2 est donc nécessairement situé sur la partie croissante de la courbe réelle A'2.

Ceci permet de mieux prédire les efforts axiaux réels exercés par les rondelles élastiques ainsi que les positions réelles des rondelles de frottement et donc d'améliorer l'efficacité du dispositif selon l'invention.

Les figures 11 à 13 illustrent une deuxième forme de réalisation de l'invention dans laquelle la seconde rondelle élastique est remplacée par une tôle élastiquement déformable, apte à exercer un effort axial.

Ladite tôle comporte une partie annulaire radiale externe et une partie annulaire radiale interne, reliées l'une à l'autre par une zone cambrée tronconique. La partie radialement interne est fixée au voile, par exemple par l'intermédiaire de rivets, et la partie radialement externe est en appui sur la seconde rondelle de guidage 15b.

Le dispositif appartient à un double volant amortisseur 16 comportant deux rondelles de guidage 17a, 17b délimitant entre elles un volume interne 18 dans lequel est logé le dispositif 1. Des ressorts de compression hélicoïdaux courbes 19 sont montés circonférentiellement entre les rondelles de guidage 17a, 17b et les pattes 4 du voile annulaire 2 du dispositif 1. Les faces radiales d'appui 9 des organes de frottement 8a, 8b sont poussées en appui sur les rondelles de guidage 17a, 17b par la rondelle élastique 15a et par la tôle élastique 15b. Par ailleurs, un moyeu interne 20 est couplé en rotation à la rondelle de guidage 17b.

La courbe caractéristique théorique A1 de la rondelle élastique 15a est illustrée sur le diagramme de la figure 13. Comme précédemment, cette courbe théorique A1 est une courbe nominale souhaitée et a un effort axial maximal noté F1, obtenu pour une déformation ou une compression C1 de la rondelle 15a.

La courbe A1 comporte ainsi une partie croissante, pour des valeurs de déformation ou de compression de la rondelle 15a comprises entre 0 et C1, suivie d'une partie décroissante pour des valeurs comprise entre C1 et Cmax. Cmax est la valeur de déformation pour laquelle la rondelle élastique 15a est complètement écrasée et vient en appui à plat sur les surfaces concernées.

Comme précédemment, compte tenu des contraintes de fabrication, la courbe caractéristique réelle A'1 peut être différente de la courbe caractéristique théorique A1. La courbe réelle A'1 peut ainsi être décalée vers le haut, le bas, la gauche et/ou la droite par rapport à la courbe théorique A1. En particulier, l'effort réel maximal peut varier entre F1+Ep et F1+En où Ep et En sont respectivement les erreurs positives et négatives dues aux contraintes de fabrication de la première rondelle. Ces erreurs sont par exemple comprises entre 0,05.F1 et 0,1.F1. On notera que l'erreur E'n est négative.

On supposera à la figure 13 un cas défavorable où la courbe réelle A'1 est décalée vers le haut par rapport à la courbe réelle A1, c'est-à-dire où l'effort maximal réel appliqué par la première rondelle est égal à F1+ Ep.

De même, la courbe caractéristique théorique A2 de la tôle élastique 15b est illustrée sur le diagramme de la figure 10. Cette courbe théorique A2 est une courbe nominale souhaitée et est continument croissante, au moins jusqu'à une valeur notée F'1.

Compte tenu des contraintes de fabrication, la courbe caractéristique réelle A'2 peut être différente de la courbe caractéristique théorique A2. La courbe réelle A'2 peut ainsi être décalée vers le haut, le bas, la gauche et/ou la droite par rapport à la courbe théorique A2. En particulier, l'effort réel maximal peut varier entre F'1+ E'p et F'1+E'n où E'p et E'n sont respectivement les erreurs positives et négatives dues aux contraintes de fabrication de la seconde rondelle. Comme précédemment, ces erreurs sont par exemple comprises entre 0,05.F'1 et 0,1.F'1. On notera que l'erreur E'n est négative.

On supposera à la figure 13 un cas défavorable où la courbe réelle A'2 est décalée vers le bas de la valeur E'n par rapport à la courbe réelle A2.

Selon l'invention, la rondelle élastique 15a et la tôle élastique 15b sont choisies, pré-déterminées ou sélectionnées de façon à ce que F1+Ep ≤ F'1+E'n.

Ainsi, pour une valeur C1 de compression de la rondelle élastique 15a, l'effort axial réel généré par la rondelle 15a est égal F1+Ep. A l'équilibre après montage, l'effort axial opposé généré par la tôle 15b est donc également égal à F1+Ep, ce qui correspond alors à une compression C'2 de la tôle 15b. Dans tous les cas, le point d'utilisation réel P2 est nécessairement situé dans une zone croissante de la courbe réelle A'2.

Ceci permet de mieux prédire les efforts axiaux réels exercés par la tôle élastique 15b et la rondelle élastique 15a ainsi que les positions réelles de ces dernières et donc d'améliorer l'efficacité du dispositif selon l'invention.

## Revendications

1. Dispositif de transmission de couple (1), notamment pour véhicule automobile, comportant un voile annulaire (2), un premier et un second organes de frottement annulaires (8a, 8b) situés axialement de part et d'autre du voile annulaire (2) et couplés en rotation avec ledit voile annulaire (2), des premiers et seconds moyens élastiques (15a, 15b) montés axialement de façon contrainte entre respectivement le premier et le second organes de frottement (8a, 8b), d'une part, et le voile annulaire (2), d'autre part, de façon à exercer un effort axial tendant à écarter axialement lesdits organes de frottement (8a, 8b) l'un de l'autre,
les premiers moyens élastiques (15a) étant choisis de façon à présenter une courbe caractéristique théorique (A1) de l'effort axial (F) généré par les premiers moyens élastiques (15a), en fonction de la déformation axiale (C) des premiers moyens élastiques (15a), comportant une portion croissante jusqu'à atteindre une première valeur d'effort théorique F1 formant un maximum d'effort théorique, suivie d'une portion décroissante, la première valeur d'effort théorique F1 étant donnée avec une première erreur positive Ep et avec une première erreur négative En,
**caractérisé en ce que** les seconds moyens élastiques (15b) sont choisis de façon à présenter une courbe caractéristique théorique (A2) de l'effort axial (F') généré par les seconds moyens élastiques (15b), en fonction de la déformation axiale (C') des seconds moyens élastiques (15b), comportant une portion croissante dans laquelle l'effort axial (F') augmente continument avec la déformation axiale (C') desdits seconds moyens élastiques (15b), au moins jusqu'à une seconde valeur d'effort théorique F'1, la seconde valeur d'effort théorique F'1 étant donnée avec une seconde erreur positive E'p et avec une seconde erreur négative E'n, les seconds moyens élastiques étant choisis tels que F1+Ep ≤ F'1+E'n.

2. Dispositif de transmission de couple selon la revendication 1, **caractérisé en ce que** les premiers moyens élastiques comportent au moins une rondelle élastiquement déformable (15a), de type rondelle Belleville.

3. Dispositif de transmission de couple selon la revendication 1 ou 2, **caractérisé en ce que** les seconds moyens élastiques comportent au moins une rondelle élastiquement déformable (15b), de type rondelle Belleville.

4. Dispositif de transmission de couple selon la revendication 1 ou 2, **caractérisé en ce que** les seconds moyens élastiques comportent au moins une tôle annulaire élastiquement déformable (15b).

5. Dispositif de transmission de couple selon la revendication 4, **caractérisé en ce que** la périphérie radialement interne de la tôle (15b) est fixée au voile (2).

6. Dispositif de transmission de couple selon l'une des revendications 1 à 5, **caractérisé en ce que** le voile annulaire (2) comporte une partie annulaire (3) à partir de laquelle des pattes (7), destinées à l'appui d'organes élastiques à action circonférentielle (19), s'étendent radialement vers l'extérieur.

7. Dispositif (1) selon l'une des revendications 1 à 6, **caractérisé en ce que** le premier et le second organes de frottement annulaires (8a, 8b) comportent des moyens de positionnement axial (11, 12, 5) et/ou radial (13a, 13b, 14a, 14b, 6) par rapport au voile (2).

8. Dispositif selon l'une des revendications 1 à 7, **caractérisé en ce que** le premier et le second organes de frottement annulaires (8a, 8b) sont de structures identiques.

9. Double volant amortisseur (16), **caractérisé en ce qu'**il comporte deux rondelles de guidage (17a, 17b) délimitant entre elles un volume interne (18) dans lequel est logé un dispositif de transmission de couple (1) selon l'une des revendications 1 à 8, les organes de frottement (8a, 8b) étant aptes à venir en appui et à frotter contre les rondelles de guidage (17a, 17b), sous l'action des premiers et seconds moyens élastiques (15a, 15b).

10. Procédé de conception d'un dispositif de transmission de couple (1), notamment pour véhicule automobile, comportant un voile annulaire (2), un premier et un second organes de frottement annulaires (8a, 8b) situés axialement de part et d'autre du voile annulaire (2) et couplés en rotation avec ledit voile annulaire (2), des premiers et seconds moyens élastiques (15a, 15b) montés axialement de façon contrainte entre respectivement le premier et le second organes de frottement (8a, 8b), d'une part, et le voile annulaire (2), d'autre part, de façon à exercer un effort axial tendant à écarter axialement lesdits organes de frottement (8a, 8b) l'un de l'autre, le procédé comportant les étapes consistant à :
- choisir les premiers moyens élastiques (15a) de façon à présenter une courbe caractéristique théorique (A1) de l'effort axial (F) généré par les premiers moyens élastiques (15a), en fonction de la déformation axiale (C) des premiers moyens élastiques (15a), comportant une portion croissante jusqu'à atteindre une première valeur d'effort théorique F1 formant un maximum d'effort théorique, suivie d'une portion décroissante, la première valeur d'effort théorique F1 étant donnée avec une première erreur positive Ep et avec une première erreur négative En,
- choisir les seconds moyens élastiques (15b) de façon à présenter une courbe caractéristique théorique (A2) de l'effort axial (F') généré par les seconds moyens élastiques (15b), en fonction de la déformation axiale (C') des seconds moyens élastiques (15b), comportant une portion croissante dans laquelle l'effort axial (F') augmente continument avec la déformation axiale (C') desdits seconds moyens élastiques (15b), au moins jusqu'à une seconde valeur d'effort théorique F'1, la seconde valeur d'effort théorique F'1 étant donnée avec une seconde erreur positive E'p et avec une seconde erreur négative E'n, les seconds moyens élastiques étant choisis tels que F1+Ep ≤ F'1+E'n.

## Patentansprüche

1. Drehmomentübertragungsvorrichtung(1), nsbesondere für ein Kraftfahrzeug, mit einer ringförmigen Abdeckung (2), einem ersten und einem zweiten ringförmigen Reibungsorgan (8a, 8b), die axial auf der einen und auf der anderen Seite der ringförmigen Abdeckung (2) liegen und drehbar mit der ringförmigen Abdeckung (2) gekoppelt sind, und mit ersten und zweiten elastischen Mitteln (15a, 15b), die axial zwischen dem ersten bzw. dem zweiten Reibungsorgan (8a, 8b) einerseits und der ringförmigen Abdeckung (2) andererseits eingespannt angeordnet sind, so dass eine axiale Kraft ausgeübtwird, die dazu neigt, die Reibungsorgane (8a, 8b) axial auseinanderrücken,
wobei die ersten elastischen Mittel (15a) derart ausgewählt sind, dass sie eine theoretische Kennlinie (A1) der von den ersten elastischen Mitteln (15a) erzeugten axialen Kraft (F) in Abhängigkeit von der axialen Verformung (C) der ersten elastischen Mittel (15a) haben, die einen ansteigenden Abschnitt aufweist, bis ein erster theoretischer Kraftwert F1 erreicht ist, der ein theoretisches Kraftmaximum bildet, worauf ein absteigender Abschnitt folgt, wobei der erste theoretische Kraftwert F1 mit einem ersten positiven Fehler Ep und einem ersten negativen Fehler En gegeben ist,
**dadurch gekennzeichnet, dass** die zweiten elastischen Mittel (15b) derart ausgewählt sind, dass sie eine theoretische Kennlinie (A2) der von den zweiten elastischen Mitteln (15b) erzeugten axialen Kraft (F') in Abhängigkeit von der axialen Verformung (C') der zweiten elastischen Mittel (15b) haben, die einen ansteigenden Abschnitt aufweist, bei dem die axiale Kraft (F') mit der axialen Verformung (C') der zweiten elastischen Mittel (15b) zumindest bis zu einem zweiten theoretischen Kraftwert F'1 kontinuierlich zunimmt, wobei der zweite theoretische Kraftwert F'1 mit einem zweiten positiven Fehler E'p und mit einem zweiten negativen Fehler E'n gegeben ist und die zweiten elastischen Mittel derart ausgewählt sind, dass F1 + Ep ≤ F'1 + E'n.

2. Drehmomentübertragungsvorrichtung nach Anspruch 1, **dadurch gekennzeichnet, dass** die ersten elastischen Mittel mindestens eine elastisch verformbare Scheibe (15a) der Art Belleville-Scheibe aufweisen.

3. Drehmomentübertragungsvorrichtung nach Anspruch 1 oder 2, **dadurch gekennzeichnet, dass** die zweiten elastischen Mittel mindestens eine elastisch verformbare Scheibe (15b) der Art Belleville-Scheibe aufweisen.

4. Drehmomentübertragungsvorrichtung nach Anspruch 1 oder 2, **dadurch gekennzeichnet, dass** die zweiten elastischen Mittel mindestens ein elastisch verformbares ringförmiges Blech (15b) aufweisen.

5. Drehmomentübertragungsvorrichtung nach Anspruch 4, **dadurch gekennzeichnet, dass** der radial innere Umfang des Blechs (15b) an der Abdeckung (2) befestigt ist.

6. Drehmomentübertragungsvorrichtung nach einem der Ansprüche 1 bis 5, **dadurch gekennzeichnet, dass** die ringförmige Abdeckung (2) einen ringförmigen Abschnitt (3) aufweist, von der sich Laschen (7), die für die Anlage von elastischen Organen mit Umfangswirkung (19) vorgesehen sind, radial nach außen erstrecken.

7. Vorrichtung (1) nach einem der Ansprüche 1 bis 6, **dadurch gekennzeichnet, dass** das erste und das zweite ringförmige Reibungsorgan (8a, 8b) Mittel (11, 12, 5) zur axialen Positionierung und/oder Mittel (13a, 13b, 14a, 14b, 6) zur radialen Positionierung in Bezug auf die Abdeckung (2) aufweisen.

8. Vorrichtung nach einem der Ansprüche 1 bis 7, **dadurch gekennzeichnet, dass** das erste und das zweite ringförmige Reibungsorgan (8a, 8b) eine identische Struktur haben.

9. Zweimassenschwungrad(16),**dadurch gekennzeichnet, dass** es zwei Führungsscheiben (17a, 17b) aufweist, zwischen denen ein Innenvolumen (18) begrenzt ist, in dem eine Drehmomentübertragungsvorrichtung (1) nach einem der Ansprüche 1 bis 8 angeordnet ist, wobei die Reibungsorgane (8a, 8b) unter der Wirkung der ersten und zweiten elastischen Mittel (15a, 15b) an den Führungsscheiben (17a, 17b) in Anlage gelangen und reiben können.

10. Drehmomentübertragungsvorrichtung (1), insbesondere für ein Kraftfahrzeug, mit einer ringförmigen Abdeckung (2), einem ersten und einem zweiten ringförmigen Reibungsorgan (8a, 8b), die axial auf der einen und auf der anderen Seite der ringförmigen Abdeckung (2) liegen und drehbar mit der ringförmigen Abdeckung (2) gekoppelt sind, und mit ersten und zweiten elastischen Mitteln (15a, 15b), die axial zwischen dem ersten bzw. dem zweiten Reibungsorgan (8a, 8b) einerseits und der ringförmigen Abdeckung (2) andererseits eingespannt angebracht sind, so dass eine axiale Kraft ausgeübt wird, die dazu neigt, die Reibungsorgane (8a, 8b) axial auseinanderzurücken, was dadurch erhalten wird, dass
- die ersten elastischen Mittel (15a) derart ausgewählt sind, dass sie eine theoretische Kennlinie (A1) der von den ersten elastischen Mitteln (15a) erzeugten axialen Kraft (F) in Abhängigkeit von der axialen Verformung (C) der ersten elastischen Mittel (15a) haben, die einen ansteigenden Abschnitt aufweist, bis ein erster theoretischer Kraftwert F1 erreicht ist, der ein theoretisches Kraftmaximum bildet, worauf ein absteigender Abschnitt folgt, wobei der erste theoretische Kraftwert F1 mit einem ersten positiven Fehler Ep und einem ersten negativen Fehler En gegeben ist,
- die zweiten elastischen Mittel (15b) derart ausgewählt sind, dass sie eine theoretische Kennlinie (A2) der von den zweiten elastischen Mitteln (15b) erzeugten axialen Kraft (F') in Abhängigkeit von der axialen Verformung (C') der zweiten elastischen Mittel (15b) haben, die einen ansteigenden Abschnitt aufweist, bei dem die axiale Kraft (F') mit der axialen Verformung (C') der zweiten elastischen Mittel (15b) zumindest bis zu einem zweiten theoretischen Kraftwert F'1 kontinuierlich zunimmt, wobei der zweite theoretische Kraftwert F'1 mit einem zweiten positiven Fehler E'p und mit einem zweiten negativen Fehler E'n gegeben ist und die zweiten elastischen Mittel derart ausgewählt sind, dass F1 + Ep ≤ F'1 + E'n.

## Claims

1. Torque transmission device (1) notably for a motor vehicle, comprising an annular web (2), a first and a second annular friction member (8a, 8b), these being situated axially one on each side of the annular web (2) and rotationally coupled to the said annular web (2), first and second elastic means (15a, 15b) mounted axially under stress between, respectively, the first and second friction members (8a, 8b) on the one hand, and the annular web (2) on the other, so as to exert an axial force tending to separate the said friction members (8a, 8b) axially from one another,
the first elastic means (15a) being chosen such that they exhibit a theoretical characteristic curve (A1) of the axial force (F) generated by the first elastic means (15a), as a function of the axial deformation (C) of the first elastic means (15a) that comprises a portion that increases until it reaches a first theoretical force value (F1) that forms a theoretical-force maximum, followed by a decrease in portion, the first theoretical force value F1 being given with a first positive error Ep and with a first negative error En,
**characterized in that** the second elastic means (15b) are chosen in such a way that they exhibit a theoretical characteristic curve (A2) of the axial force (F') generated by the second elastic means (15b), as a function of the axial deformation (C') of the second elastic means (15b) that comprise an increasing portion in which the axial force (F') increases continuously with the axial deformation (C') of the said second elastic means (15b), at least up to a second theoretical force value F'1, the second theoretical force value F'1 being given with a second positive error E'p and with a second negative error E'n, the second elastic means being chosen such that F1 + Ep ≤ F'1 + E'n.

2. Torque transmission device according to Claim 1, **characterized in that** the first elastic means comprise at least one elastically deformable washer (15a) of the Belleville spring washer type.

3. Torque transmission device according to Claim 1 or 2, **characterized in that** the second elastic means comprise at least one elastically deformable washer (15b) of the Belleville spring washer type.

4. Torque transmission device according to Claim 1 or 2, **characterized in that** the second elastic means comprise at least one elastically deformable annular sheet (15b).

5. Torque transmission device according to Claim 4, **characterized in that** the radially internal periphery of the sheet (15b) is fixed to the web (2).

6. Torque transmission device according to one of Claims 1 to 5, **characterized in that** the annular web (2) comprises an annular part (3) from which tabs (7), intended for the pressing of circumferentially-acting elastic members (19), extend radially outwards.

7. Device (1) according to one of Claims 1 to 6, **characterized in that** the first and the second annular friction members (8a, 8b) comprise means (11, 12, 5) for axial positioning and/or means (13a, 13b, 14a, 14b, 6) for radial positioning with respect to the web (2).

8. Device according to one of Claims 1 to 7, **characterized in that** the first and second annular friction members (8a, 8b) have identical structures.

9. Dual-mass flywheel (16), **characterized in that** it comprises two guide washers (17a, 17b) between them delimiting an internal volume (18) in which a torque transmission device (1) according to one of Claims 1 to 8 is housed, the friction members (8a, 8b) being able to come to press and rub against the guide washers (17a, 17b) under the action of the first and second elastic means (15a, 15b).

10. Method for designing a torque transmission device (1) notably for a motor vehicle, comprising an annular web (2), a first and a second annular friction member (8a, 8b), these being situated axially one on each side of the annular web (2) and rotationally coupled to the said annular web (2), first and second elastic means (15a, 15b) mounted axially under stress between, respectively, the first and second friction members (8a, 8b) on the one hand, and the annular web (2) on the other, so as to exert an axial force tending to separate the said friction members (8a, 8b) axially from one another, the method comprising the steps consisting in:
- selecting the first elastic means (15a) so that they exhibit a theoretical characteristic curve (A1) of the axial force (F) generated by the first elastic means (15a), as a function of the axial deformation (C) of the first elastic means (15a) that comprise a portion that increases until it reaches a first theoretical force value (F1) that forms a theoretical-force maximum, followed by a decrease in portion, the first theoretical force value F1 being given with a first positive error Ep and with a first negative error En,
- selecting the second elastic means (15b) so that they exhibit a theoretical characteristic curve (A2) of the axial force (F') generated by the second elastic means (15b), as a function of the axial deformation (C') of the second elastic means (15b) that comprises an increasing portion in which the axial force (F') increases continuously with the axial deformation (C') of the said second elastic means (15b), at least up to a second theoretical force value F'1, the second theoretical force value F'1 being given with a second positive error E'p and with a second negative error E'n, the second elastic means being chosen such that F1 + Ep ≤ F'1 + E'n.
